# EUROPEAN PATENT APPLICATION

(11) **EP 1 754 638 A1**
(43) Date of publication of application: **21.02.2007**
(21) Application number: 06015391.3
(22) Date of filing: 24.07.2006
(51) Int. Cl.: B60R 22/24

(54) **Seat-belt guide anchor and seat belt apparatus having the same**

(30) Priority: 19.08.2005 JP 2005238564
(71) Applicant: TAKATA CORPORATION, Minato-ku, Tokyo 106-8510 (JP)
(72) Inventor: Tabata, Yuki, Tokyo 106-8510 (JP); Nagayoshi, Yukio, Tokyo 106-8510 (JP)
(74) Representative: Vossius & Partner

(57) **Abstract**

A seat-belt guide anchor is provided that has a simple structure, is small, can be formed from a metal flat plate, does not need heat treatments, and therefore can provide a reduction in the production man-hours and the production cost. A seat-belt guide anchor 6 is formed from a metal flat plate and includes a flat-plate-like mounting portion 6a for attachment to a vehicle body, and a flat-plate-like belt guide portion 6b having a belt guide hole 6b₁. A flange-like outer circular protrusion 6e is provided on the entire outer edge of a portion including the mounting portion 6a and the belt guide portion 6b and is formed by bending the outer edge. A flange-like inner circular protrusion 6c is provided on the entire inner edge of the belt guide hole 6b₁ of the belt guide portion 6b and is formed by bending the inner edge (FIG. 1).

## Description

The present invention relates to a technical field of a seat belt apparatus that is attached to a vehicle seat and restrains and protects an occupant in the event of an emergency. More specifically, the present invention relates to a technical field of a seat-belt guide anchor that is swingably supported by a vehicle body, for example, a vehicle body pillar and slidably guides a seat belt of a seat belt apparatus in the longitudinal direction of the seat belt.

Seat belt apparatuses attached to a seat of a vehicle, for example, an automobile, restrain to protect an occupant with a seat belt from inertially moving in the event of an emergency in which a large vehicle deceleration occurs, such as a vehicle collision.

Such seat belt apparatuses are provided with a guide anchor swingably supported by an inner wall of a vehicle body, for example, a vehicle body pillar and have a belt guide hole for slidably guiding a seat belt in its longitudinal direction. When the guide anchor is attached to a vehicle body, its belt guide hole generally extends in the longitudinal direction of the vehicle. The guide anchor enables the seat belt to restrain the occupant in the correct position.

There is known a conventional seat-belt guide anchor such that a metal fitting plate is formed by punching a strip-shaped steel plate and subjected to heat treatments of quenching and tempering, the metal fitting plate is provided with a plate-mounting hole through which a bolt can be passed and a belt insertion hole through which a seat belt can be passed, the belt insertion hole is coated by resin molding process and is elongate so that the seat belt can be slidably passed through it, a bulge is formed on the edge of the belt insertion hole on which the seat belt slides, on each side of the plate, and therefore the seat belt can smoothly slide and the strength of the metal fitting plate is improved (for example, see JP-A-9-164907(Patent Document 1)).

In the guide anchor disclosed in Patent Document 1, since the belt insertion hole is coated by resin molding process, the area of the belt guide surface of the belt insertion hole is large, and the seat belt can smoothly and stably slide.

There is known another conventional seat-belt guide anchor that includes a mounting plate and a metal fitting frame, the mounting plate having a mounting hole, the metal fitting frame partially surrounding the mounting plate and being bent like the rim of a pot, the mounting plate and the metal fitting frame forming a notch for passing a seat belt therebetween, the lower portion of the metal fitting frame serving as a deflecting crossbar that slidably guides the seat belt, the metal fitting frame and the deflecting crossbar having additional parts, and the seat-belt guide anchor being formed from a thin steel plate only (for example, see JP-A-54-155646(Patent Document 2)).

In the guide anchor disclosed in Patent Document 2, since the belt-sliding surface of the deflecting crossbar, which slidably guides the seat belt, is curved, the area of the belt guide surface of the belt insertion hole is large, and the seat belt can smoothly and stably slide.

In seat belt apparatuses, when an occupant is restrained by a seat belt in the event of an emergency, a large force is exerted on a guide anchor from a seat belt due to inertial force of the occupant and such. Therefore, in the guide anchor disclosed in Patent Document 1, heat treatments of quenching and tempering are performed on the metal fitting plate of the guide anchor, thereby increasing the strength of the metal fitting plate. However, such heat treatments of the metal fitting plate increases the production man-hours and the production cost, and thus becoming a problem.

In the guide anchor disclosed in Patent Document 2, the additional parts provided in the metal fitting frame and the deflecting crossbar increase the strength of those parts somewhat. However, in between the mounting plate and the metal fitting frame formed like the rim of a pot, that is to say, in the area where the notch is formed, the shape changes sharply. In addition, the large force from the seat belt is supported by the metal fitting frame only. Therefore, although being increased somewhat by the additional parts, the strength is not sufficient to bear the large force. In addition, since the part of the mounting plate between the mounting hole and the notch is merely a flat plate, the strength is not sufficient. Therefore, although not disclosed in Patent Document 2, it is necessary to perform heat treatments on the thin steel plate from which this guide anchor is formed, as disclosed in Patent Document 1, and there are the same problems as described above.

In addition, in the guide anchor disclosed in Patent Document 2, since the metal fitting frame is provided around the mounting plate, the mounting plate is inevitably large. This makes the size of the entire guide anchor large and causes an increase in weight. Moreover, since the metal fitting frame is provided around the mounting plate, the structure is complex, and the process of forming the guide anchor is difficult.

The present invention has been made in view of such circumstances, and an object of the present invention is to provide a seat-belt guide anchor that has a simple structure, is small, can be formed from a metal flat plate, does not need heat treatments, and therefore can provide a reduction in the production man-hours and the production cost, and to provide a seat belt apparatus using the seat-belt guide anchor.

To solve the above problems, the seat-belt guide anchor of the invention of Claim 1 is formed from a metal flat plate, is swingably attached to a vehicle body or a vehicle seat, and guides a seat belt that is slidably passed through a belt-guide hole. The seat-belt guide anchor includes a flat-plate-like mounting portion, a flat-plate-like belt guide portion, and a flange-like outer circular protrusion. The mounting portion has a mounting hole through which a fixator for attachment to the vehicle body or the vehicle seat is passed. The belt guide portion has the belt guide hole.. The outer circular protrusion is provided on the entire outer edge of a portion including the mounting portion and the belt guide portion and is formed by bending the outer edge.

The seat-belt guide anchor of the invention of Claim 2 further includes a flange-like inner circular protrusion that is provided on the entire inner edge of the belt guide hole of the belt guide portion and is formed by bending the inner edge.

The seat belt apparatus of the invention of Claim 3 includes at least a seat belt, a seat belt retractor, a seat-belt guide anchor, a tongue, and a buckle. The seat belt restrains an occupant in the event of an emergency. The seat belt retractor retracts the seat belt. The seat-belt guide anchor guides the seat belt withdrawn from the seat belt retractor to a shoulder of the occupant. The tongue is slidably supported by the seat belt that is guided by the seat-belt guide anchor. The tongue is engageably inserted into and engageably released from the buckle. The seat-belt guide anchor is a seat-belt guide anchor according to Claim 1 or 2.

In the seat-belt guide anchor according to the present invention configured as above, since the flange-like outer circular protrusion is provided on the entire outer edge of a portion including the flat-plate-like mounting portion and belt guide portion, the strength of the mounting portion of the seat-belt guide anchor, the strength of the part between the mounting portion and the belt guide portion of the seat-belt guide anchor, and the strength of the entire seat-belt guide anchor can be increased. Therefore, heat treatment such as quenching is not necessary for the metal flat plate constituting the seat-belt guide anchor. The metal flat plate that is not subjected to heat treatment can sufficiently bear the large load applied from the seat belt in the event of an emergency. Therefore, the heat treatment process can be omitted, the production man-hours can be reduced, and the production cost can be reduced.

In addition, since the outer circular protrusion is formed by simply bending the entire outer edge of the seat-belt guide anchor, in spite of the outer circular protrusion, the size of the entire seat-belt guide anchor can be comparatively small, and an increase in weight can be prevented. Moreover, since the outer circular protrusion is formed by simply bending, the structure is simple, and the guide anchor can be easily formed.

Furthermore, since the belt guide hole is formed in the flat-plate-like belt guide portion, the shape of the seat-belt guide anchor does not change sharply in the area where the belt guide hole is formed, and the strength sufficient to bear the large force from the seat belt can be ensured.

In particular, in the seat-belt guide anchor according to the invention of Claim 2, since the flange-like inner circular protrusion is provided on the entire inner edge of the belt guide hole of the belt guide portion, the strength of the belt guide portion of the seat-belt guide anchor can be increased.

Since the strength of the entire seat-belt guide anchor is high and the production cost thereof is low, the seat belt apparatus according to the present invention can surely restrain an occupant with a seat belt in the event of an emergency in which a larger than normal vehicle deceleration occurs, such as a vehicle collision, and is inexpensive.

The best mode for carrying out the present invention will now be described with reference to the drawings.
FIG. 1 schematically shows an example of an embodiment of a seat belt apparatus having a seat-belt guide anchor according to the present invention; and
FIG. 2 schematically shows an example of an embodiment of a seat-belt guide anchor according to the present invention, (a) being a front view, and (b) being a sectional view taken along line IIB-IIB of (a).

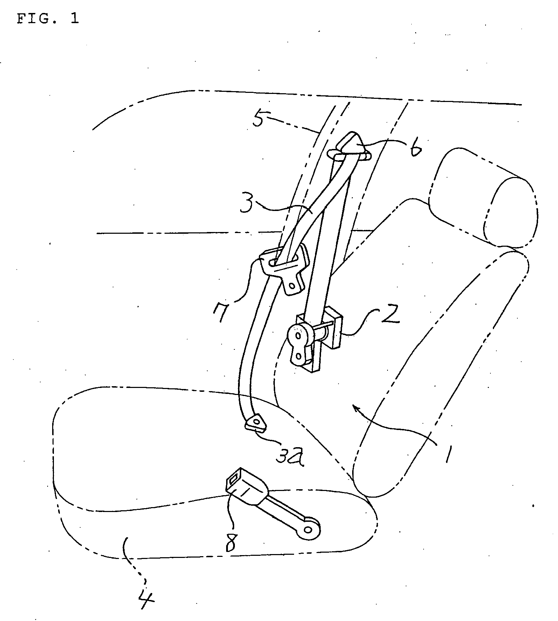

As shown in FIG. 1, the seat belt apparatus 1 of this example includes a seat belt retractor 2, a seat belt 3, a seat-belt guide anchor 6, a tongue 7, and a buckle 8. The seat belt retractor 2 is fixed to, for example, a B-pillar (not shown) of a vehicle body. The seat belt 3 is withdrawn from the seat belt retractor 2, and a belt anchor 3a at the end of the seat belt 3 is fixed to the floor of the vehicle body or a vehicle seat 4. The seat-belt guide anchor 6 is provided in, for example, the vehicle body or the vehicle seat 4 (a center pillar 5 in the shown example). The seat belt 3 withdrawn from the seat belt retractor 2 is guided to a shoulder of an occupant (not shown) by the seat-belt guide anchor 6. (This example will be described hereinafter on the assumption that the guide anchor 6 is provided in the center pillar 5.) The tongue 7 is slidably supported by the seat belt 3 guided by the seat-belt guide anchor 6. The buckle 8 is fixed to the floor of the vehicle body or the vehicle seat 4 (the vehicle seat 4 in the shown example). The tongue 7 is engageably inserted into and engageably released from the buckle 8.

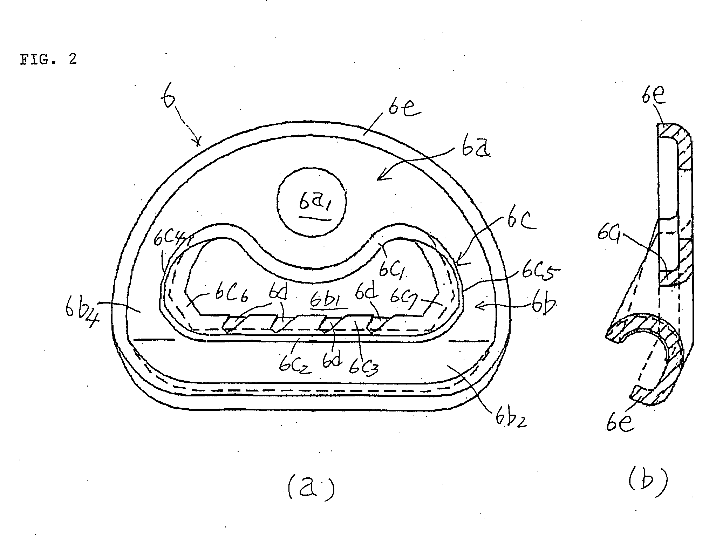

FIG. 2 schematically shows an example of an embodiment of a seat-belt guide anchor according to the present invention, (a) being a front view, and (b) being a sectional view taken along line IIB-IIB of (a).
As shown in FIG. 2(a), the seat-belt guide anchor 6 of this example is formed by pressing a flat plate of metal such as steel. This seat-belt guide anchor 6 includes a mounting portion 6a and a belt guide portion 6b. The mounting portion 6a has a mounting hole 6a₁. A fixator such as a bolt for swingably attaching the seat-belt guide anchor 6 to the center pillar 5 is passed through the mounting hole 6a₁. The belt guide portion 6b has a belt guide hole 6b₁ that guides the seat belt 3. The seat belt 3 slidably passes through the belt guide hole 6b₁. The lower end 6b₂ of the belt guide portion 6b is bent to a side opposite the center pillar 5 at a predetermined angle with respect to the mounting portion 6a and the upper end 6b₃ of the belt guide portion 6b coplanar with the mounting portion 6a. The present invention is not limited to this. The lower end 6b₂ may be not bent but coplanar with the mounting portion 6a and the upper end 6b₃.

The belt guide hole 6b₁ is formed in the flat-plate-like upper end 6b₃. The inner edge of the belt guide portion 6b forming the belt guide hole 6b₁ is bent by burring, in the same direction as that in which the lower end 6b₂ is bent, substantially at a right angle with respect to respective flat surfaces of the mounting portion 6a and the upper end 6b₃, so as to form an inner circular protrusion 6c. As shown in FIG. 2(b), the upper part 6c₁ of the inner circular protrusion 6c is a straight flange and increases the strength of the upper side of the inner edge of the belt guide portion 6b. In addition, the lower part 6c₂ of the inner circular protrusion 6c is a curved flange. The seat belt 3 is slidably guided by a belt guide surface 6c₃ that is formed by the curved surface of this lower part 6c₂. The length of the curve of the curved lower part 6c₂ is much larger than the protruding length of the upper part 6c₁. Since the belt-guide area of the curved belt-guide surface 6c₃ in the lower part 6c₂ is large and the belt guide surface 6c₃ is curved, the belt guide surface 6c₃ smoothly and stably guides the seat belt 3. In addition, the curved lower part 6c₂ increases the strength of the lower side of the inner edge of the belt guide portion 6b.

Both the vehicle-front (left in FIG. 2(a)) side edge 6c₄ and the vehicle-rear (right in FIG. 2(a)) side edge 6c₅ of the inner circular protrusion 6c are flanges protruding so as to continuously change from straight to curved, from the upper part 6c₁ to the lower part 6c₂. The vehicle-front and rear side edges 6c₄ and 6c₅ are symmetrical with respect to each other. The length of the curve of the curved parts of the vehicle-front and rear side edges 6c₄ and 6c₅ increases gradually. Thus, the vehicle-front and rear side edges 6c₄ and 6c₅ of the inner circular protrusion 6c increase the strength of the vehicle-front and rear sides of the inner edge of the belt guide portion 6b. The curved surfaces of the parts of the vehicle-front and rear side edges 6c₄ and 6c₅ next to the lower part 6c₂ are belt guide surfaces 6c₆ and 6c₇ that slidably guide the seat belt 3 when the seat belt 3 moves from the belt guide surface 6c₃ to either the left or right side.

In this example, the vehicle-front and rear side edges 6c₄ and 6c₅ are symmetrical with respect to each other. However, the present invention is not limited to this. The vehicle-front and rear side edges 6c₄ and 6c₅ may be asymmetrical with respect to each other.

A predetermined number of (four in the shown example) grooves 6d are provided in the belt guide surface 6c₃ of the lower part 6c₂. The grooves 6d are curved along the curve of the belt guide surface 6c₃. The grooves 6d extend from the center pillar 5 side to the other side through the belt guide hole 6b₁ and incline substantially along the direction in which the seat belt 3 withdrawn from the seat belt retractor 2 moves.

For example, if the pretensioner is activated in the event of an emergency and the seat belt 3 is rapidly retracted by the seat belt retractor 2 or if the seat belt 3 is withdrawn from the seat belt retractor 2 more rapidly than normal, the seat belt 3 tries to move to the vehicle-front side of the belt guide hole 6b₁ (the vehicle-front side edge 6c₄ of the inner circular protrusion 6c) or the vehicle-rear side of the belt guide hole 6b₁ (the vehicle-rear side edge 6c₅ of the inner circular protrusion 6c) but is prevented from moving to the vehicle-front side by the grooves 6d because the seat belt 3 is subjected to reaction force from the step on the edge of each groove 6d between the belt guide surface 6c₃ and the surface of the groove 6d. Since the grooves 6d of the belt guide surface 6c₃ incline substantially along the direction in which the seat belt 3 moves, the grooves 6d do not prevent the seat belt 3 from smoothly sliding on the belt guide surface 6c₃, and withdrawing and retracting of the seat belt 3 is stably performed in normal times.

In addition, the seat-belt guide anchor 6 of this example has a flange-like outer circular protrusion 6e on its outer edge. This outer circular protrusion 6e is formed by bending the entire outer edge of the seat-belt guide anchor 6 including the flat-plate-like mounting portion 6a and belt guide portion 6b, substantially at a right angle with respect to respective flat surfaces of the mounting portion 6a, the upper end 6b₃, and the lower end 6b₂. This outer circular protrusion 6e increases the strength of the entire seat-belt guide anchor 6. In particular, the strength of the mounting portion 6a of the seat-belt guide anchor 6, and the strength of the part between the mounting portion 6a and the belt guide portion 6b of the seat-belt guide anchor 6 are effectively increased.

In the seat-belt guide anchor 6 of this example, since the flange-like outer circular protrusion 6e is provided on the entire'outer edge of the portion including the flat-plate-like mounting portion 6a and belt guide portion 6b, the strength of the mounting portion 6a of the seat-belt guide anchor 6, the strength of the part between the mounting portion 6a and the belt guide portion 6b of the seat-belt guide anchor 6, and the strength of the entire seat-belt guide anchor 6 can be increased. Therefore, heat treatment such as quenching is not necessary for the metal flat plate constituting the seat-belt guide anchor 6. The metal flat plate that is not subjected to heat treatment can sufficiently bear the large load applied from the seat belt 3 in the event of an emergency. Therefore, the heat treatment process can be omitted, the production man-hours can be reduced, and the production cost can be reduced.

In addition, since the outer circular protrusion 6e is simply bent substantially at a right angle with respect to respective flat surfaces of the mounting portion 6, the upper end 6b₃, and the lower end 6b₂, in spite of the outer circular protrusion 6e, the size of the entire seat-belt guide anchor 6 can be comparatively small, and an increase in weight can be prevented. Moreover, since the outer circular protrusion 6e is formed by simply bending, the structure is simple, and the guide anchor can be easily formed.

Furthermore, since the belt guide hole 6b₁ is formed in the flat-plate-like belt guide portion 6b, the shape of the seat-belt guide anchor 6 does not change sharply in the area where the belt guide hole 6b₁ is formed, and the strength sufficient to bear the large force from the seat belt 3 can be ensured.

In addition, since the strength of the entire seat-belt guide anchor 6 can be thus increased, the strength of the inner edge of the mounting hole 6a₁ of the mounting portion 6a can be increased without forming into a flange-like cylindrical protrusion by burring. Therefore, the size of the mounting hole 6a₁ can be prevented from being increased by burring performed for ensuring strength. Thus, the size of the entire seat-belt guide anchor 6 can more effectively be prevented from increasing.

In addition, since the flange-like inner circular protrusion 6c is provided on the entire inner edge of the belt guide hole 6b₁ of the belt guide portion 6b, the strength of the belt guide portion 6b of the seat-belt guide anchor 6 can be increased.

In addition, since the belt guide area of the belt guide surface 6c₃ is large and the belt guide surface 6c₃ is curved, the seat belt 3 can be guided smoothly and stably by the belt guide surface 6c₃.

In addition, since the belt guide surface 6c₃ is provided with the grooves 6d, if the seat belt 3 is rapidly retracted or withdrawn, the seat belt 3 can be prevented from moving to the vehicle-front side of the belt guide hole 6b₁. Moreover, since the grooves 6d of the belt guide surface 6c₃ incline substantially along the direction in which the seat belt 3 moves, the seat belt 3 can smoothly slide on the belt guide surface 6c₃ when being withdrawn or retracted in normal times, in spite of the grooves 6d, and therefore withdrawing and retracting of the seat belt 3 in normal times can be stably performed.

The seat-belt guide anchor and the seat belt apparatus having the same according to the present invention are suitable for use in and as a seat belt apparatus that is attached to a vehicle seat and restrains and protects an occupant with a seat belt in the event of an emergency, more specifically, a seat belt apparatus having a seat-belt guide anchor that is swingably supported by a vehicle body, for example, a vehicle body pillar and slidably guides a seat belt of the seat belt apparatus in the longitudinal direction of the seat belt.

## Claims

1. A seat-belt guide anchor that is formed from a metal flat plate, is swingably attached to a vehicle body or a vehicle seat, and guides a seat belt that is slidably passed through a belt guide hole, the seat-belt guide anchor comprising:
a flat-plate-like mounting portion having a mounting hole through which a fixator for attachment to the vehicle body or the vehicle seat is passed;
a flat-plate-like belt guide portion having the belt guide hole; and
a flange-like outer circular protrusion that is provided on the entire outer edge of a portion including the mounting portion and the belt guide portion and is formed by bending the outer edge.

2. The seat-belt guide anchor according to Claim 1, further comprising a flange-like inner circular protrusion that is provided on the entire inner edge of the belt guide hole of the belt guide portion and is formed by bending the inner edge.

3. A seat belt apparatus comprising at least:
a seat belt that restrains an occupant in the event of an emergency;
a seat belt retractor that retracts the seat belt;
a seat-belt guide anchor that guides the seat belt withdrawn from the seat belt retractor to a shoulder of the occupant;
a tongue that is slidably supported by the seat belt that is guided by the seat-belt guide anchor; and
a buckle into which the tongue is engageably inserted and from which the tongue is engageably released,
wherein the seat-belt guide anchor is a seat-belt guide anchor according to Claim 1 or 2.
